# DEMANDE DE BREVET EUROPEEN

(11) **EP 1 081 318 A1**
(43) Date de publication de la demande: **07.03.2001**
(21) Numéro de dépôt: 00402413.9
(22) Date de dépôt: 01.09.2000
(51) Int. Cl.: E05B 65/19, E05B 9/00, B60J 5/10

(54) **Caisson pour le montage d'une serrure de porte de coffre ou de hayon d'un véhicule automobile, procédé pour monter une serrure dans un tel caisson, ainsi que porte de coffre ou hayon comportant ce caisson**

(30) Priorité: 01.09.1999 FR 9910969
(71) Demandeur: Renault, 92100 Boulogne Billancourt (FR)
(72) Inventeur: Raspail, Bruno, 78280 Guyancourt (FR)

(57) **Abrégé**

L'invention concerne un caisson comportant une face principale (12a) raccordée à la paroi de la porte de coffre ou du hayon par des faces secondaires (12b-12e) de raccordement et délimitant avec ladite paroi un volume interne (6) destiné à recevoir la serrure (3) d'une porte de coffre ou d'un hayon d'un véhicule automobile, ladite face principale (12a) du caisson (12) étant percée d'au moins une ouverture (14) unique, qui présente une hauteur supérieure à sa largeur, et a des dimensions telles qu'on puisse introduire dans ledit volume interne la partie (3b) de la serrure abritant le mécanisme d'actionnement lorsque ladite partie est introduite en une position inclinée sur le côté, mais qu'on ne puisse pas réaliser cette introduction avec la serrure en position horizontale de travail.

Utilisation dans l'industrie automobile.

## Description

L'invention concerne un procédé et un caisson pour le montage d'une serrure de porte de coffre ou de hayon d'un véhicule automobile, ainsi qu'une porte de coffre ou un hayon comportant ce caisson.

Il est connu de prévoir à la partie inférieure de la porte du coffre ou du hayon d'un véhicule automobile, un caisson positionné sur la face intérieure de la porte et du hayon et destiné à recevoir la serrure de ce coffre ou hayon.

Les serrures habituellement utilisées comportent une partie antérieure abritant le pêne (partie mobile de la serrure) et une partie postérieure abritant le mécanisme d'actionnement de la serrure, cette dernière étant usuellement plus volumineuse que la première. Afin de pouvoir monter la serrure dans le caisson, il est habituellement prévu deux ouvertures dans le caisson, une première ouverture supérieure prévue sur une face supérieure du caisson et de taille suffisante pour laisser passer la serrure et une deuxième ouverture inférieure de taille plus petite, prévue sur une face verticale ou sensiblement verticale du caisson. Le montage de la serrure est effectué en introduisant la serrure, disposée sensiblement verticalement et la partie antérieure en tête, dans l'ouverture supérieure, en descendant la serrure et en la faisant pivoter à l'intérieur du caisson d'à peu près 90° pour l'amener en position sensiblement horizontale à un niveau correspondant à l'ouverture inférieure du caisson, en faisant passer la partie antérieure de la serrure à travers l'ouverture inférieure jusqu'à ce que la partie postérieure de la serrure vienne buter contre la paroi du caisson ; et, enfin, en fixant cette partie postérieure à la paroi du caisson par exemple à l'aide de vis.

Ce mode de montage connu présente plusieurs inconvénients :
- L'ouverture supérieure constitue un point de vulnérabilité pour la serrure.
- La connexion de la serrure dans le cas d'une commande d'ouverture électrique) est malaisée car les connexions électriques doivent être faites à l'intérieur du caisson.
- L'encombrement du caisson est assez important car le volume interne du caisson doit être assez grand pour permettre le pivotement à 90° vers l'avant de la serrure.

Il existe donc un besoin pour un procédé et un caisson autorisant un montage plus aisé de la serrure de la porte d'un coffre ou d'un hayon.

La présente invention vise à satisfaire ce besoin en fournissant un caisson de conception nouvelle et un procédé de montage tirant parti de ce caisson.

L'invention concerne un nouveau caisson comportant une face principale raccordée à la paroi de la porte de coffre ou du hayon par des faces secondaires de raccordement et délimitant avec ladite paroi un volume interne destiné à recevoir la serrure d'une porte de coffre ou d'un hayon d'un véhicule automobile, ladite face principale du caisson étant percée d'au moins une ouverture, caractérisé en ce que ladite ouverture est unique, présente une hauteur supérieure à sa largeur, et a des dimensions telles qu'on puisse introduire dans ledit volume interne la partie de la serrure abritant le mécanisme d'actionnement lorsque ladite partie est introduite en une position inclinée sur le côté, mais qu'on ne puisse pas réaliser cette introduction avec la serrure en position horizontale de travail.

Selon un mode de réalisation particulier, la hauteur de l'ouverture est légèrement inférieure à la largeur de la partie de la serrure abritant le mécanisme d'actionnement.

L'invention concerne aussi une porte de coffre ou un hayon de véhicule automobile comportant un caisson conforme à l'invention.

L'invention concerne enfin un procédé de montage de la serrure d'une porte de coffre ou d'un hayon d'un véhicule automobile à utiliser avec le caisson de l'invention, caractérisé en ce qu'il comprend les étapes consistant à :
a) présenter la serrure inclinée sur le côté, la partie de la serrure abritant le mécanisme d'entraînement étant en tête, devant l'ouverture du caisson,
b) introduire ladite partie de la serrure dans le caisson, à travers ladite ouverture,
c) si nécessaire, faire pivoter la serrure pour amener son axe longitudinal en position sensiblement horizontale,
d) faire pivoter d'environ 90° la serrure autour de son axe longitudinal, et
e) amener la serrure en sa position de fixation et la fixer au caisson.

Selon un mode de réalisation particulier, l'axe longitudinal de la serrure est disposé obliquement dans l'étape (a).

La description qui va suivre faite en se référant aux dessins annexés fera bien comprendre l'invention.

Les figures 1 et 2 sont des vues en perspective et en coupe verticale respectivement, illustrant le montage d'une serrure de porte de coffre pourvue d'un caisson selon l'art antérieur.

La figure 3 est une vue en perspective illustrant un caisson de porte de coffre selon l'invention, et les figures 4 à 9 sont des vues en coupe verticale illustrant le montage d'une serrure dans le caisson de la figure 3.

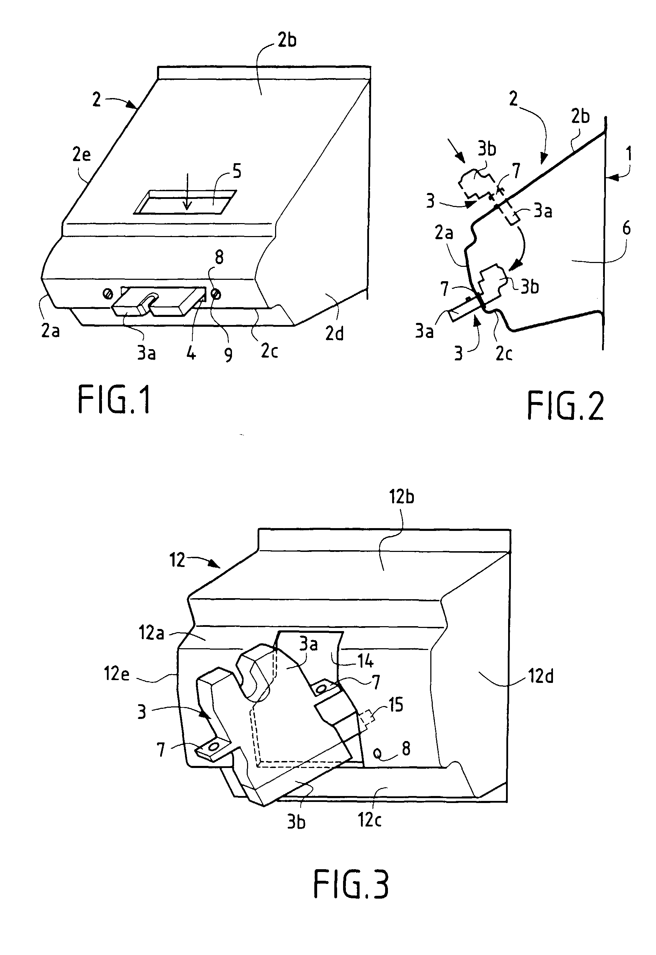

Sur les figures 1 et 2 est représentée une porte de coffre 1 (partiellement représentée) comportant sur sa face interne un caisson 2 destiné à recevoir une serrure 3 de fermeture du coffre. Le caisson 2 comporte une face principale profilée 2a pourvue d'une première ouverture rectangulaire 4 et raccordée à la porte 1 par une face supérieure 2b, une face inférieure 2c et des faces latérales 2d et 2e. La face supérieure 2b est percée d'une deuxième ouverture rectangulaire 5. Les faces du caisson délimitent avec la paroi de la porte 1 un volume 6 destiné à recevoir la serrure 3. La serrure 3 comporte une partie antérieure 3a abritant le pêne et une partie postérieure 3b, de section plus importante que la partie 3a, abritant le mécanisme d'actionnement de la serrure et pourvue de moyens de fixation, tels que des oreilles percées 7. Pour le montage, la serrure 3 est présentée verticalement, la partie antérieure 3a en tête, en face de l'ouverture rectangulaire 5, dont les dimensions sont suffisantes pour laisser passer la serrure, introduite dans ladite ouverture et descendue dans le caisson tout en la faisant pivoter d'à peu près 90° à l'intérieur de ce dernier pour amener la serrure en position sensiblement horizontale avec la partie antérieure 3a en face de l'ouverture rectangulaire 4 dont la largeur est moindre que celle de l'ouverture rectangulaire 5 et prévue pour ne laisser passer que la partie antérieure 3a de la serrure. Ensuite, on enfile la partie antérieure 3a dans l'ouverture 4 jusqu'à ce que les oreilles 7 de la partie postérieure 3b viennent buter contre la face 2a du caisson avec leurs perçages coïncidant avec des perçages 8 prévus dans la face 2a, de part et d'autre de l'ouverture 4. Enfin on fixe la serrure, par exemple à l'aide de vis 9 traversant les perçages 8 et engageant les perçages des oreilles 7. Des flèches illustrent sur la figure 2 le trajet suivi par la serrure.

Ce mode de montage présente les inconvénients rappelés dans le préambule.

La figure 3 illustre un caisson destiné au montage d'une serrure de porte de coffre, conforme à l'invention.

Ce caisson 12 comporte une face principale profilée 12a raccordée à la porte 1 (partiellement représentée) par une face supérieure 12b, une face inférieure 12c et des faces latérales 12d et 12e. Le caisson de l'invention comporte une unique ouverture profilée 14 découpée dans la face principale 12a.

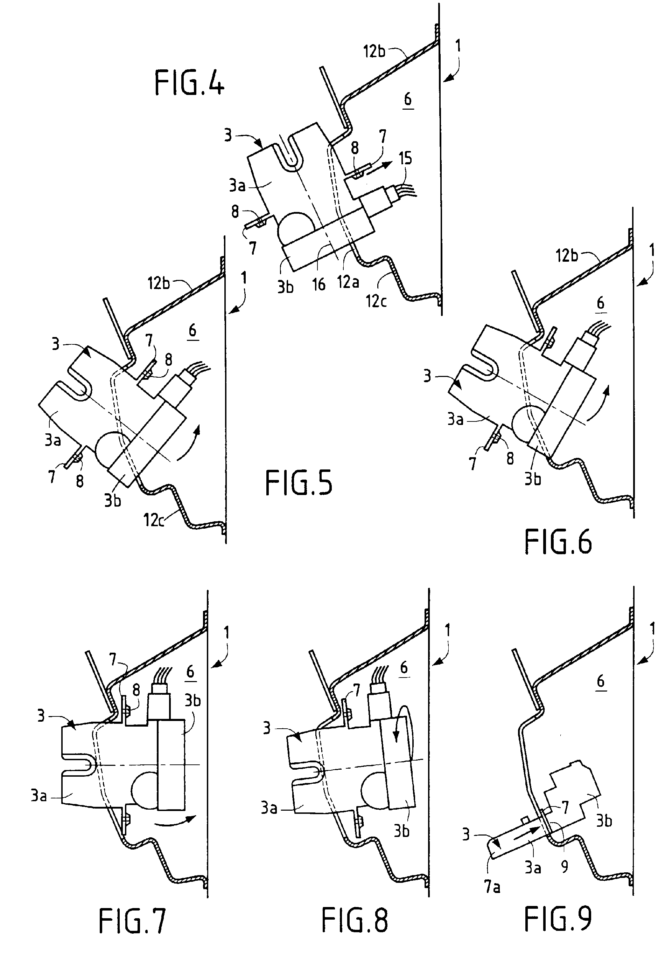

Cette ouverture 14 présente une hauteur supérieure à sa largeur et a des dimensions telles, par rapport aux dimensions de la serrure à monter dans ledit caisson, que l'on puisse introduire la serrure 3, la partie postérieure 3b en tête, lorsque celle-ci est engagée en position inclinée sur le côté, mais que l'on ne puisse pas réaliser une telle introduction avec la serrure en position horizontale de travail. Sur la figure 3, la serrure 3 est représentée dans une position correspondant à celle de la figure 4.

Les figures 4 à 9 illustrent plus en détail les différentes phases du procédé de montage d'une serrure dans le caisson de l'invention.

Tout d'abord, s'agissant d'une serrure électrique, on commence par effectuer les connexions électriques 15 nécessaires sur la partie postérieure 3b de la serrure tandis que celle-ci est encore en dehors du caisson, ce qui facilite beaucoup l'opération en question. Ensuite, comme représenté sur la figure 4, on commence par introduire à travers l'ouverture 14 le côté de la partie postérieure 3b portant la connectique 15, la serrure étant inclinée sur le côté et orientée obliquement vers le bas. Puis, on fait pivoter vers le haut la partie 3b de la serrure, comme l'illustrent les figures 5 à 7, jusqu'à ce que la totalité de la partie postérieure 3b (y compris les oreilles 7) se trouve à l'intérieur du caisson et que l'axe longitudinal 16 de la serrure soit sensiblement à l'horizontale. On fait alors subir une rotation de 90° à la serrure autour de son axe longitudinal (figure 8) et on vient appliquer lesdites oreilles contre la face 12a afin de pouvoir les fixer par les vis 9 (figure 9).

Dans le mode de réalisation représenté sur les figures 3 à 9, la hauteur de l'ouverture 14 n'est pas suffisante pour pouvoir introduire directement la serrure dans l'ouverture avec son axe longitudinal en position sensiblement horizontale, ce qui explique qu'il faille l'introduire en position oblique et lui faire subir ensuite un mouvement de pivotement pour amener l'axe longitudinal de la serrure en position sensiblement horizontale. Toutefois, il entre dans le cadre de l'invention de prévoir une ouverture 14 de hauteur suffisante pour permettre une telle introduction directe. Dans ce cas les phases de pivotement seraient omises et on exécuterait directement la rotation à 90° après l'introduction de la partie postérieure 3b de la serrure dans le volume du caisson.

Bien entendu, l'invention n'est pas limitée au mode de réalisation décrit et représenté, fourni à titre illustratif et non limitatif.

## Revendications

1. Caisson comportant une face principale (12a) raccordée à la paroi de la porte de coffre ou du hayon par des faces secondaires (12b-12e) de raccordement et délimitant avec ladite paroi un volume interne (6) destiné à recevoir la serrure (3) d'une porte de coffre ou d'un hayon d'un véhicule automobile, ladite face principale (12a) du caisson (12) étant percée d'au moins une ouverture, caractérisé en ce que ladite ouverture (14) est unique, présente une hauteur supérieure à sa largeur, et a des dimensions telles qu'on puisse introduire dans ledit volume interne la partie (3b) de la serrure abritant le mécanisme d'actionnement lorsque ladite partie est introduite en une position inclinée sur le côté, mais qu'on ne puisse pas réaliser cette introduction avec la serrure en position horizontale de travail.

2. Caisson selon la revendication 1, caractérisé en ce que la hauteur de l'ouverture est légèrement inférieure à la largeur de la partie de la serrure abritant le mécanisme d'actionnement.

3. Porte de coffre ou hayon d'un véhicule automobile, comprenant un caisson destiné- au montage d'une serrure, caractérisé en ce que ledit caisson est tel que défini à la revendication 1 ou 2.

4. Procédé de montage de la serrure d'une porte de coffre ou d'un hayon d'un véhicule automobile à utiliser avec le caisson défini à la revendication 1 ou 2, caractérisé en ce qu'il comprend les étapes consistant à:
a) présenter la serrure (3) inclinée sur le côté, la partie (3b) de la serrure abritant le mécanisme d'entraînement étant en tête, devant l'ouverture (14) du caisson (12),
b) introduire ladite partie de la serrure dans le caisson, à travers ladite ouverture,
c) si nécessaire, faire pivoter la serrure pour amener son axe longitudinal (16) en position sensiblement horizontale,
d) faire pivoter d'environ 90° la serrure autour de son axe longitudinal, et
e) amener la serrure en sa position de fixation et la fixer au caisson.

5. Procédé selon la revendication 4, caractérisé en ce que l'axe longitudinal de la serrure est disposé obliquement dans l'étape (a).

6. Procédé selon la revendication 4, caractérisé en ce que le branchement des connexions électriques est effectué avant l'étape (a).
